Europäisches Patentamt

European Patent Office

Office européen des brevets

(11) Veröffentlichungsnummer: **0 137 866**
A1

(12) # EUROPÄISCHE PATENTANMELDUNG

(21) Anmeldenummer: 83110315.5

(51) Int. Cl.⁴: **H 04 B 7/26**, H 04 Q 7/04

(22) Anmeldetag: 15.10.83

(43) Veröffentlichungstag der Anmeldung: **24.04.85**
**Patentblatt 85/17**

(84) Benannte Vertragsstaaten: **DE FR GB IT SE**

(71) Anmelder: **ANT Nachrichtentechnik GmbH,
Gerberstrasse 33, D-7150 Backnang (DE)**

(72) Erfinder: **Pfeiffer, Theodor, Dr. Ing., Kelterweg 46,
D-7012 Fellbach (DE)**
Erfinder: **Sperlich, Josef, Dipl.-Ing., Kelterweg 52,
D-7150 Backnang (DE)**

(74) Vertreter: **Schickle, Gerhard, Dipl.-Ing., ANT
Nachrichtentechnik GmbH Patent- und Lizenzabteilung
Gerberstrasse 33, D-7150 Backnang (DE)**

(54) **Verfahren zum Herstellen einer Fernsprechverbindung zwischen einem ortsfesten und einem mobilen Teilnehmer.**

(57) Die Erfindung betrifft ein Verfahren zum Herstellen einer Fernsprechverbindung zwischen einem an ein Fernsprechnetz angeschlossenen ortsfesten Teilnehmer (T1) und einem mit einem Funkempfänger ausgestatteten mobilen Teilnehmer (T2). Dabei wählt der ortsfeste Teilnehmer (11) unter Angabe der Teilnehmernummer des mobilen Teilnehmers eine Rufzentrale (RZ) an. Von dort aus wird diese Teilnehmernummer zu einem Satelliten (SAT) übertragen, der sie auf die Erde wieder ausstrahlt. Der diese Teilnehmernummer detektierende Funkempfänger signalisiert dann, daß der ortsfeste Teilnehmer (T1) rückgerufen werden soll.

Verfahren zum Herstellen einer Fernsprechverbindung
zwischen einem ortsfesten und einem mobilen Teilnehmer

Die vorliegende Erfindung betrifft ein Verfahren zum Herstellen
einer Fernsprechverbindung zwischen einem an ein Fernsprechnetz
angeschlossenen ortsfesten Teilnehmer und einem mit einem Funkempfänger ausgestatteten mobilen Teilnehmer.

Aus der DE-OS 2 228 327 ist ein Verfahren bekannt, um eine
Fernsprechverbindung zwischen einem an das öffentliche Selbstwähl-Fernsprechnetz angeschlossenen Teilnehmer und einem mobilen mit einem Funkempfänger ausgestatteten Teilnehmer herzustellen. Dabei ist das gesamte Gebiet, das für den Aufenthalt
des mobilen Teilnehmers in Frage kommt, in mehrere Funkverkehrsbereiche, zu denen jeweils eine ortsfeste Funkstelle gehört, aufgeteilt. Um nun einen mobilen Teilnehmer, dessen
augenblicklicher Standort dem ortsfesten Teilnehmer nicht bekannt ist, erreichen zu können, müssen die Funkstellen sämtlicher Funkbereiche angewählt werden und jede Funkstelle muß
ein Suchsignal für den mobilen Teilnehmer abgeben.

Der Erfindung liegt nun die Aufgabe zugrunde, ein Verfahren
der eingangs genannten Art anzugeben, das den Einsatz vieler
Funkbereiche und die damit verbundene aufwendige Suchprozedur
nach dem mobilen Teilnehmer umgeht.

Erfindungsgemäß wird diese Aufgabe dadurch gelöst, daß der
ortsfeste Teilnehmer eine mit dem Fernsprechnetz verbundene
Rufzentrale anwählt unter Angabe der Nummer des gesuchten
mobilen Teilnehmers, daß diese Teilnehmernummer von der Rufzentrale an eine Erdfunkstelle übermittelt wird, von der aus
sie zu einem Satelliten ausgesendet wird, daß der Satellit
die Teilnehmernummer zur Erde flächendeckend zurücksendet
und daß der Funkempfänger des gesuchten mobilen Teilnehmers nach dem Empfang seiner eigenen Teilnehmernummer dem Teilnehmer signalisiert, den ortsfesten Teilnehmer über das Fernsprechnetz anzurufen.

Zweckmäßige Ausführungen der Erfindung gehen aus den Unteransprüchen hervor.

Der Einsatz eines Satelliten ermöglicht es, nur mit einem einzigen Funkverkehrsbereich auszukommen, da er das Signal für den
mobilen Teilnehmer über ein sehr großes Gebiet auf der Erde
flächendeckend ausstrahlen kann. Da erfindungsgemäß nur noch
ein Funkverkehrsbereich vorhanden ist, ergibt sich vorteilhafterweise eine Ersparnis an Funkfrequenzbändern, von denen
sonst jedem der vielen Funkverkehrsbereiche ein eigenes zugeordnet werden müßte.

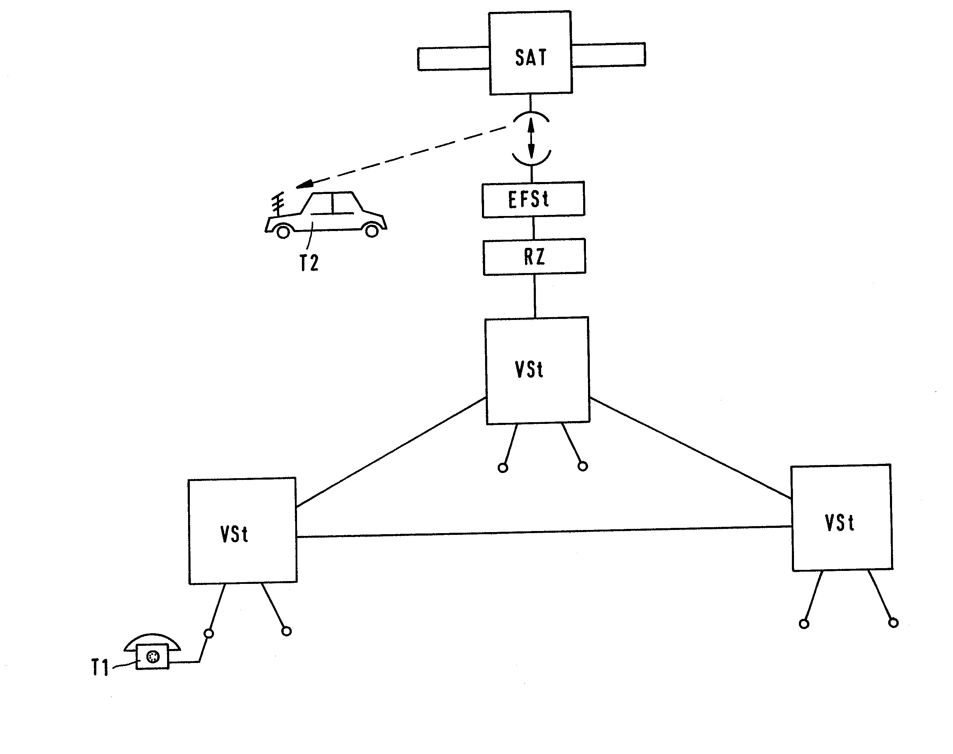

Anhand eines in der Figur dargestellten Schemas wird nun die
Erfindung näher erläutert.
Wie bereits einleitend erwähnt, soll zwischen einem ortsfesten,
an ein Fernsprechnetz mit Vermittlungsstellen VSt, Nebenstellenanlagen, öffentlichen Fernsprechern und dgl. angeschlossener
Teilnehmer T1 und einem mobilen, mit einem Funkempfänger ausgestatteter Teilnehmer T2 eine Fernsprechverbindung hergestellt werden. Dazu wählt der ortsfeste Teilnehmer T1 mit
einer z.B. landeseinheitlichen Kurzrufnummer eine an das
Fernsprechnetz angeschlossene Rufzentrale RZ an. Anschließend
übermittelt er der Rufzentrale die Teilnehmernummer des von
ihm gewünschten Teilnehmers T2. Sobald die Teilnehmernummer
in der Rufzentrale RZ eingegangen ist, erhält der ortsfeste
Teilnehmer T1 ein Quittungssignal, z.B. der Art: "Hier Rufzentrale, der gewählte Teilnehmer wird gerufen".

Die Rufzentrale ordnet die einlaufenden Anrufe von mehreren
ortsfesten Teilnehmern der Reihe nach in einer Ruffolgeliste
an und übermittelt sie an eine mit der Rufzentrale verbundene
Erdfunkstelle EFSt.

Die Erdfunkstelle sendet die in einem kontinuierlichen Bitstrom angelieferten Teilnehmernummern der gesuchten mobilen
Teilnehmer unter Modulation auf ein Trägersignal zu einem
Satelliten SAT, der diese Teilnehmernummern flächendeckend
auf die Erde wieder zurücksendet.

Alle mobilen Teilnehmer besitzen Funkempfänger, die in der
Lage sind, das vom Satelliten ausgesendete Signal empfangen
und demodulieren zu können.

Derjenige Funkempfänger, der aus dem Satellitensignal seine
eigene Teilnehmernummer detektiert, gibt ein optisches oder
akustisches Signal ab, welches dem Teilnehmer anzeigt, daß
er über das Fernsprechnetz den ortsfesten Teilnehmer anrufen
soll.

Damit der mobile Teilnehmer T2 weiß, welchen ortsfesten Teilnehmer T1 er anrufen soll, ist es zweckmäßig, daß dem mobilen Teilnehmer auch die Teilnehmernummer des zurückzurufenden
ortsfesten Teilnehmers übermittelt wird. Für diesen Fall muß
der Funkempfänger mit einer Anzeige für eine Ziffernfolge versehen sein. Die Rufprozedur des ortsfesten Teilnehmers könnte
dabei folgendermaßen ablaufen: der ortsfeste Teilnehmer wählt
zunächst die Kurzrufnummer der Rufzentrale und die Teilnehmernummer des mobilen Teilnehmers. Nachdem so die Verbindung zur Rufzentrale hergestellt ist, erhält der ortsfeste
Teilnehmer T1 die Aufforderung, seine eigene Teilnehmernummer zu wählen. Das Quittungssignal erhält der ortsfeste
Teilnehmer dann erst nach Wahl seiner eigenen Teilnehmernummer.

Um sicher zu gewährleisten, daß der gesuchte mobile Teilnehmer auch das Rufsignal erhält, sollte vom Satelliten
mehrmals in kurzen zeitlichen Abständen ausgesendet werden.

ANT Nachrichtentechnik GmbH                    E7/Th/ht
Gerberstraße 33                                BK 83/113
D-7150  Backnang


Patentansprüche:


1. Verfahren zum Herstellen einer Fernsprechverbindung zwischen einem an ein Fernsprechnetz angeschlossenen ortsfesten Teilnehmer und einem mit einem Funkempfänger ausgestatteten mobilen Teilnehmer, dadurch gekennzeichnet,
   daß der ortsfeste Teilnehmer (T1) eine mit dem Fernsprechnetz verbundene Rufzentrale (RZ) anwählt unter Angabe der
   Nummer des gesuchten mobilen Teilnehmers (T2), daß diese
   Teilnehmernummer von der Rufzentrale (RZ) an eine Erdfunkstelle (EFSt) übermittelt wird, von der aus sie zu
   einem Satelliten (SAT) ausgesendet wird, daß der Satellit
   die Teilnehmernummer zur Erde flächendeckend zurücksendet und daß der Funkempfänger des gesuchten mobilen Teilnehmers (T2) nach dem Empfang seiner eigenen Teilnehmernummer dem Teilnehmer signalisiert, den ortsfesten Teilnehmer (T1) über das Fernsprechnetz anzurufen.


2. Verfahren nach Anspruch 1, dadurch gekennzeichnet, daß
   dem Funkempfänger des mobilen Teilnehmers (T2) neben seiner eigenen Teilnehmernummer auch die Teilnehmernummer

- 2 -    BK 83/013 37 866

des rufenden, ortsfesten Teilnehmers (T1), der vom mobilen
Teilnehmer über das Fernsprechnetz angerufen werden soll,
übermittelt und dort zur Anzeige gebracht wird.

3. Verfahren nach Anspruch 1 oder 2, <u>dadurch gekennzeichnet</u>,
daß nach Eingang der Teilnehmernummer(n) in der Rufzentrale (RZ) die Rufzentrale an den ortsfesten, an das Fernsprechnetz angeschlossenen Teilnehmer (T1) ein Quittungssignal übermittelt.

4. Verfahren nach Anspruch 1 oder 2, <u>dadurch gekennzeichnet</u>,
daß die Teilnehmernummer(n) mehrmals in kurzen zeitlichen
Abständen von der Rufzentrale über den Satelliten (SAT)
ausgesendet werden.

Europäisches
Patentamt

**EUROPÄISCHER RECHERCHENBERICHT**

0137866

Nummer der Anmeldung

EP 83 11 0315

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | TECHNISCHE RUNDSCHAU, Nr. 26, 29. Juni 1982, Seite 9, Bern, CH. H. KOCH et al.: "Ein Funkrufsystem für Städte und Regionen" * Absatz 1 * | 1 | H 04 B 7/26 H 04 Q 7/04 |
| A | TECHNISCHE RUNDSCHAU --- | 2,3 | |
| Y | THE NATIONAL TELESYSTEMS CONFERENCE, Galveston, Texas, US, 7.-10. November 1982, Konferenzbericht, Abschnitt B1.1, IEEE, New York, USA F. NADERI: "An advanced generation land mobile satellite system and its critical technologies" * Seiten B1.1.1 - B1.1.2, Absätze "Introduction" und "System description" * --- | 1 | |
| A | DE-A-2 056 349 (TEKADE) * Seite 3, Zeile 8 - Seite 4, Zeile 8; Figur * --- -/- | 1,2 | |

RECHERCHIERTE SACHGEBIETE (Int. Cl. 3)

H 04 B
H 04 Q

Der vorliegende Recherchenbericht wurde für alle Patentansprüche erstellt.

| Recherchenort | Abschlußdatum der Recherche | Prüfer |
|---|---|---|
| DEN HAAG | 21-05-1984 | GULDNER H.D. |

Europäisches
Patentamt

**EUROPÄISCHER RECHERCHENBERICHT**

0137866

Nummer der Anmeldung

EP 83 11 0315

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | THE NATIONAL TELESYSTEMS CONFERENCE, Galveston, TExas, US, 7.-10. November 1982, Konferenzbericht, Abschnitt B1.3, IEEE, New York, US R.R. LOVELL et al.: "An experiment to enable commercial mobile satellite service" * Seite B1.3.3, Absatz 3.1 "Experiment configuration"; Figur 3 * | 1 | |
| A | IEEE INTERNATIONAL CONFERENCE ON COMMUNICATIONS, Philadelphia, 13.-17. Juni 1982, Konferenzbericht, Band 3, Abschnitt 7H.4, IEEE, New York, USA T. FREYGARD: "Feasibility of international transport communications system" * Seiten 7H.4.3 - 7H.4.4, Absatz "General experiment features" * | 1,4 | |
| A | NTZ, Band 34, Heft 3, 1981, Seite 178, Berlin, DE. J. GABEL: "Japan plant Satelliten-Autotelefone" * Insgesamt * | 1 | RECHERCHIERTE SACHGEBIETE (Int. Cl. ³) |
| A | DE-A-2 228 327 (TEKADE) * Seite 5, Zeilen 27-29 * | 4 | |

Der vorliegende Recherchenbericht wurde für alle Patentansprüche erstellt.

| Recherchenort | Abschlußdatum der Recherche | Prüfer |
|---|---|---|
| DEN HAAG | 21-05-1984 | GULDNER H.D. |